# EUROPÄISCHE PATENTSCHRIFT

(11) **EP 2 724 994 B1**
(45) Veröffentlichungstag und Bekanntmachung des Hinweises auf die Patenterteilung: **06.01.2016**
(21) Anmeldenummer: 12007312.7
(22) Anmeldetag: 24.10.2012
(51) Int. Cl.: C03B 37/04, C03B 37/095

(54) **ZERFASERUNGSELEMENT ZUR HERSTELLUNG VON MINERALWOLLE**
DEFIBRING ELEMENT FOR MANUFACTURING MINERAL WOOL
ÉLÉMENT DE DÉFIBRAGE POUR LA FABRICATION DE LAINE MINÉRALE

(43) Veröffentlichungstag der Anmeldung: 30.04.2014
(73) Patentinhaber: K-Protech GmbH, 81739 München (DE)
(72) Erfinder: Kuhn, Klaus, 81739 München (DE)
(74) Vertreter: Hoefer & Partner Patentanwälte mbB

(56) Entgegenhaltungen:
- EP-A1- 0 525 816
- EP-A2- 0 381 179
- JP-A- S62 207 738
- US-A- 4 812 372

## Beschreibung

Vorliegende Erfindung betrifft ein Zerfaserungselement zur Herstellung von Mineralwolle sowie eine Vorrichtung umfassend das Zerfaserungselement. Des Weiteren umfasst die Erfindung ein Verfahren zur Herstellung des Zerfaserungselementes.

Bei der Herstellung von Mineralwolle, insbesondere Steinwolle oder Glaswolle wird ein geschmolzenes Gemenge aus Glas oder Stein über einen sogenannten Feeder in eine Zerfaserungsmaschine gefördert. In der Zerfaserungsmaschine wird mittels eines Zerfaserungselementes die Schmelze in einzelne Fasern aufgeteilt. Aus den einzelnen Fasern wird die Mineralwolle gebildet. Im Stand der Technik wird als Zerfaserungselement beispielsweise ein Sieb verwendet. Die Schmelze tritt durch die Löcher des Siebes und wird dabei in einzelne Fäden aufgeteilt. Das Sieb kann dabei rotieren und wird auch als Schleuderscheibe, Schleuderring oder Spinnerscheibe bezeichnet. Diese Siebe werden insbesondere zur Herstellung von Glaswolle verwendet. Ferner gibt es Zerfaserungselemente, die als Düsen oder als rotierende Scheiben ausgebildet sind. Bei Verwendung der Düse wird die Schmelze durch die Düse, beispielsweise mit Druckluft, gefördert. Dabei entsteht eine Aufspaltung in einzelne Fasern. Bei Verwendung der Scheibe wird die Scheibe in Rotation versetzt und die Schmelze läuft auf die rotierende Mantelfläche der Scheibe. Die Düse und die rotierende Scheibe werden insbesondere zur Herstellung von Steinwolle verwendet.

Problematisch ist stets die hohe mechanische und thermische Beanspruchung der Zerfaserungselemente. Bei den Sieben führt die Dauerbeanspruchung beispielsweise dazu, dass die feinen Durchgangslöcher bereits nach 200 Betriebsstunden ausgeweitet bzw. vergrößert werden und somit die Faserdicke der Glasfasern zunimmt. Ab diesem Zeitpunkt nimmt auch die Qualität der Glasfaser als späterer Dämmstoff rapide ab und ist für den Hersteller nicht mehr brauchbar. Daher müssen die verbrauchten Siebe nach ca. 200 Betriebsstunden ersetzt werden. Die alten Siebe müssen eingeschmolzen und komplett neu hergestellt werden. Dies ist mit einem hohen Kosten- und Arbeitsaufwand verbunden. In den vergangenen Jahrzehnten wurden die Zerfaserungselemente aus verschiedensten Stahllegierungen hergestellt. Allerdings wurde keine Legierung gefunden, die die Laufzeit der Zerfaserungselemente wesentlich verbessern konnte.

EP 0 525 816 A1 zeigt ein Zerfaserungselement nach dem Oberbegriff des Anspruchs 1.

Es ist Aufgabe vorliegender Erfindung, ein Zerfaserungselement zur Herstellung von Mineralwolle bereitzustellen, das bei kostengünstiger Herstellung optimale Verschleißeigenschaften aufweist. Des Weiteren ist es Aufgabe vorliegender Erfindung, ein Verfahren zur Herstellung des Zerfaserungselementes anzugeben.

Die Lösung der Aufgaben erfolgt durch die unabhängigen Ansprüche. Die abhängigen Ansprüche haben jeweils vorteilhafte Ausgestaltungen der Erfindung zum Gegenstand.

Somit wird die Aufgabe gelöst durch ein Zerfaserungselement zur Herstellung von Mineralwolle. Bei dem Herstellungsprozess wird eine Schmelze auf oder in das Zerfaserungselement gegossen. Durch das Zerfaserungselement erfolgt ein Aufteilen der Schmelze in einzelne Fasern. Insbesondere wird ein Gemenge aus geschmolzenem Glas oder geschmolzenem Stein auf das Zerfaserungselement gegossen. Das Zerfaserungselement umfasst einen Grundkörper und eine auf den Grundkörper aufgebrachte Beschichtung. Die Beschichtung ist zumindest partiell auf den Grundkörper aufgebracht und deckt somit die Bereiche des Grundkörpes ab, die der größten Belastung ausgesetzt sind. Als Beschichtung wird ein hochtemperaturbeständiges und verschleißfestes Material gewählt. Der Grundkörper kann aus einem relativ kostengünstigen Werkstoff, beispielsweise einem einfachen Stahl oder einem Guss, bestehen. Um eine ausreichend temperaturbeständige und verschleißfeste Oberfläche zu erreichen, wird der Grundkörper erfindungsgemäß beschichtet.

Die Beschichtung besteht bevorzugt aus kleinen kristallinen Partikeln von einer Größe bis zu 1 µm. Insbesondere ist eine Nanobeschichtung vorgesehen. Bei der Nanobeschichtung werden Partikel mit einer Größe von bis zu 500 Nanometern verwendet. Besonders bevorzugt wird eine Beschichtung gewählt, die bei einer Temperatur von über 1.000°C beständig ist. Besonders bevorzugt ist die Beschichtung noch bei einer Temperatur von über 1.100°C beständig. Bei der Herstellung von Glaswolle wird eine Schmelze mit einer Temperatur von über 1.100°C verwendet. Für die Herstellung von Steinwolle wird bevorzugt eine Beschichtung gewählt, die bei einer Temperatur von über 1.400°C noch beständig ist. Besonders bevorzugt ist die Beschichtung zumindest zweischichtig aufgebaut. Auf den Grundkörper wird zunächst eine erste Schicht aufgetragen. Auf diese erste Schicht wird eine zweite Schicht aufgetragen. Die erste Schicht dient in erster Linie zur Haftvermittlung zwischen dem Grundkörper und der zweiten Schicht. Die erste Schicht basiert bevorzugt auf TiAlN. Die zweite Schicht basiert bevorzugt auf AlCrN. Die zweite Schicht ist insbesondere eine kristalline Nanoschicht.

Zur Herstellung von Glaswolle ist das Zerfaserungselement besonders bevorzugt als Sieb ausgebildet. Hierzu weist das Zerfaserungselement eine Siebfläche auf. In die Siebfläche sind mehrere Durchgangslöcher vorgesehen. Die Schmelze tritt durch diese Durchgangslöcher hindurch und wird dabei in einzelne Fasern aufgeteilt. Insbesondere wird die Siebfläche an einem Ringmantel des Zerfaserungselementes angeordnet. Im Herstellungsprozess wird das Zerfaserungselement in Rotation versetzt. Durch die Zentrifugalkraft tritt die Schmelze durch die Siebfläche hindurch nach außen und wird dabei durch die Durchgangslöcher gedrückt.

Die Innenwandungen der Durchgangslöcher und insbesondere auch die Siebfläche werden mit der erfindungsgemäßen Beschichtung versehen, da diese Flächen am stärksten belastet sind. Die Durchgangslöcher weisen bevorzugt einen Durchmesser zwischen 0,3 mm und 2 mm, vorzugsweise zwischen 0,5 mm und 1,5 mm, auf.

Alternativ zur Ausbildung des Zerfaserungselementes als rotierendes Sieb ist es vorgesehen, das Zerfaserungselement als Düse auszubilden. Die Düse wird insbesondere zur Herstellung von Steinwolle verwendet. Die Düse ist bevorzugt als Trichter ausgebildet. Insbesondere ist zumindest die Innenseite der Düse mit der erfindungsgemäßen Beschichtung versehen.

Die Erfindung umfasst des Weiteren eine Vorrichtung zur Herstellung von Mineralwolle. Die Vorrichtung umfasst das soeben beschriebene Zerfaserungselement. Des Weiteren ist eine Zuführvorrichtung zum Gießen der Schmelze auf oder in das Zerfaserungselement vorgesehen. Insbesondere weist die Vorrichtung einen Antrieb zum Rotieren des Zerfaserungselementes auf. Dieser Antrieb ist vorzugsweise zum Rotieren des Zerfaserungselementes mit über 1.500 U/min, vorzugsweise über 2.000 U/min, ausgebildet. Das Zerfaserungselement ist hierzu vorzugsweise als rotierendes Sieb ausgebildet. Dieses rotierende Sieb wird auch als Schleuderring, Spinnerscheibe oder Schleuderscheibe bezeichnet.

Des Weiteren umfasst die Erfindung ein Verfahren zur Herstellung des Zerfaserungselementes. In dem Verfahren wird zunächst der Grundkörper des Zerfaserungselementes bereitgestellt und daraufhin die Beschichtung aufgebracht. Die im Rahmen des erfindungsgemäßen Zerfaserungselementes beschriebenen vorteilhaften Ausgestaltungen und Unteransprüche finden entsprechend vorteilhafte Anwendung auf das erfindungsgemäße Verfahren.

Nachfolgend wird ein Ausführungsbeispiel der Erfindung anhand der begleitenden Zeichnungen im Detail beschrieben. Dabei zeigen:
- Fig. 1: eine isometrische Ansicht eines Zerfaserungselementes gemäß einem Ausführungsbeispiel,
- Fig. 2: eine Schnittansicht des erfindungsgemäßen Zerfaserungselementes gemäß dem Ausführungsbeispiel, und
- Fig. 3: ein Detail des erfindungsgemäßen Zerfaserungselementes gemäß dem Ausführungsbeispiel.

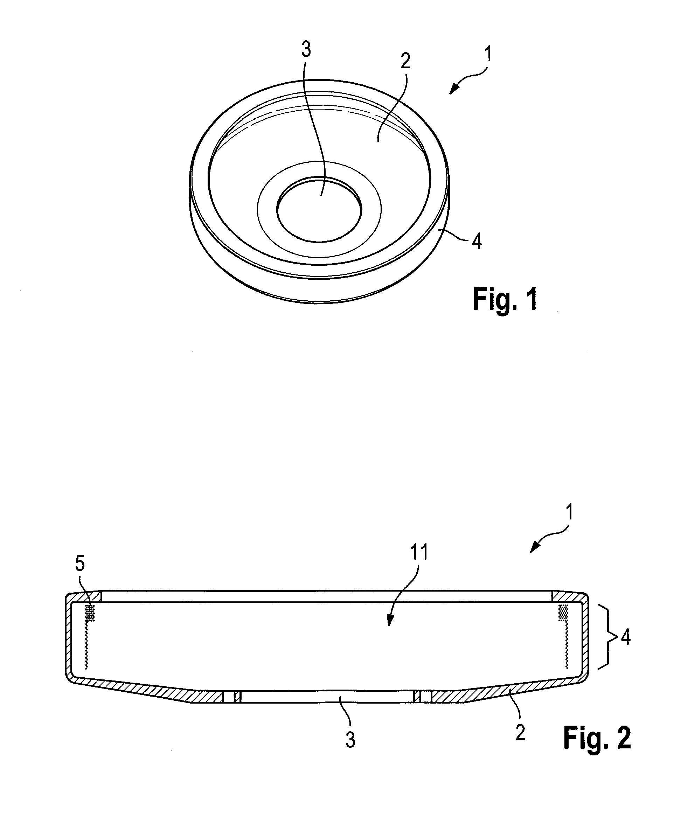

Die Fig. 1 bis 3 zeigen ein Ausführungsbeispiel eines Zerfaserungselementes 1. Das Zerfaserungselement ist einstückig aufgebaut und weist eine Scheibe 2 auf. In der Scheibe 2 ist eine Achsaufnahme 3 ausgebildet. Über diese Achsaufnahme 3 wird das Zerfaserungselement 1 auf eine Achse aufgesetzt. Über die Achse wird das Zerfaserungselement 1 in Rotation versetzt.

Voll umfänglich um die Scheibe 2 ist eine Siebfläche 4 ausgebildet. Die Siebfläche 4 bildet somit einen Ringmantel des Zerfaserungselementes 1.

Insbesondere der Schnitt in Fig. 2 zeigt, dass in der Siebfläche 4 eine Vielzahl an Durchgangslöchern 5 ausgebildet sind. Gezeigt sind lediglich wenige der Durchgangslöcher 5. Tatsächlich weist die gesamte Siebfläche 4 Durchgangslöcher 5 auf.

Im Verfahren zur Herstellung von Glaswolle wird eine Schmelze von oben auf eine Innenseite 11 des Zerfaserungselementes 1 gegossen. Durch die Rotation des Zerfaserungselementes 1 wird die Schmelze aufgrund der Zentrifugalkraft durch die Siebfläche 4 und somit durch die Durchgangslöcher 5 durch nach außen befördert. Beim Durchtreten der Schmelze durch die Durchgangslöcher 5 teilt sich die Schmelze in einzelne Fasern auf. Die Innenseite 11 und die Durchgangslöcher 5 sind dabei einer hohen mechanischen und thermischen Beanspruchung ausgesetzt. Das Zerfaserungselement 1 rotiert beispielsweise mit 2.200 U/min und die Schmelze wird mit 1.150°C zugeführt.

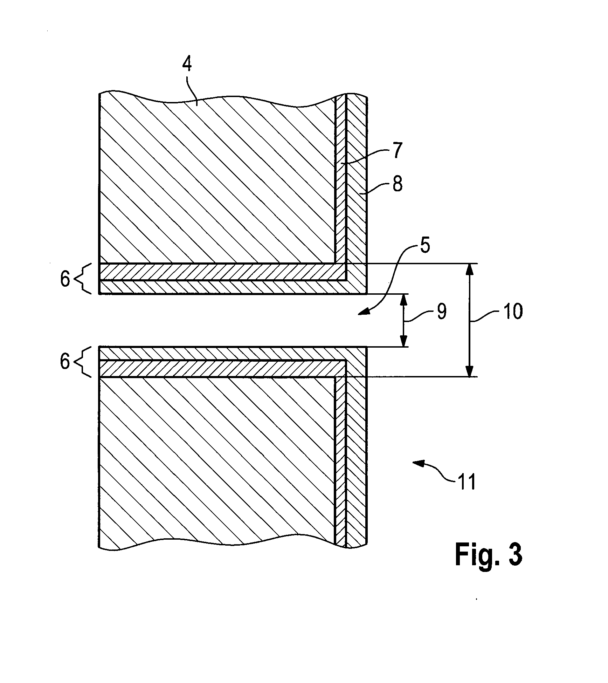

Fig. 3 zeigt in schematisch vereinfachter Darstellung einen Schnitt durch eines der Durchgangslöcher 5. Zu sehen ist ein Teil der Siebfläche 4. Die Siebfläche 4 stellt hier den Grundkörper dar, der mit einer Beschichtung 6 beschichtet wird. Die Beschichtung 6 setzt sich im Ausführungsbeispiel zusammen aus einer ersten Schicht 7 und einer zweiten Schicht 8. Die erste Schicht 7 befindet sich zwischen dem Grundkörper und der zweiten Schicht 8. Die erste Schicht 7 dient insbesondere zur Haftvermittlung zwischen der zweiten Schicht 8 und dem Grundkörper. Insbesondere sind die Innenwandungen der Durchgangslöcher 5 beschichtet. Darüberhinaus ist im gezeigten Ausführungsbeispiel auch die Innenseite 11 des Zerfaserungselementes 1 beschichtet.

Die Durchgangslöcher 5 in der Siebfläche 4 weisen einen Aufmaßdurchmesser 10 auf. Dieser Aufmaßdurchmesser 10 wird durch die Beschichtung 6 verringert, so dass letztendlich der Durchmesser 9 der Durchgangslöcher 5 entsteht. Dieser Durchmesser 9 liegt bevorzugt zwischen 0,3 mm und 2 mm.

Die Beschichtung 6 kann auch nur aus einer Schicht bestehen. Ausschlaggebend ist, dass die Beschichtung 6 ausreichend temperatur- und verschleißfest ist, um den Stahl des Grundkörpers insbesondere im Bereich der Siebfläche 4 vor Erosion durch die hohen mechanischen und thermischen Belastungen zu schützen.

Der Versuch hat gezeigt, dass Beschichtungen, insbesondere basierend auf AlCrN oder AlTiN oder TiAlN diese Eigenschaften aufweisen. Durch Verwendung entsprechend kleiner, insbesondere nanokristalliner Partikel, war es im Versuch möglich, auch die Innenwandungen der Durchgangslöcher 5 gut zu beschichten.

### Bezugszeichenliste

- 1: Zerfaserungselement
- 2: Scheibe
- 3: Achsaufnahme
- 4: Siebfläche
- 5: Durchgangslöcher
- 6: Beschichtung
- 7: erste Schicht
- 8: zweite Schicht
- 9: Durchmesser der Durchgangslöcher
- 10: Aufmaßdurchmesser
- 11: Innenseite

## Patentansprüche

1. Zerfaserungselement (1) zur Herstellung von Mineralwolle durch Gießen einer Schmelze, vorzugsweise aus geschmolzenem Glas, in das Zerfaserungselement (1), umfassend
- einen als rotierendes Sieb ausgebildeten Grundkörper, und
- eine Siebfläche (4) mit mehreren Durchgangslöchern (5) zum Aufteilen der Schmelze in einzelne Fasern, wobei die Siebfläche (4) an einem Ringmantel des Grundkörpers ausgebildet ist,
**dadurch gekennzeichnet, dass** zumindest partiell auf den Grundkörper eine hochtemperaturbeständige und verschleißfeste Beschichtung (6) aufgebracht ist, wobei die Innenwandungen der Durchgangslöcher (5) beschichtet sind.

2. Zerfaserungselement nach Anspruch 1, **dadurch gekennzeichnet, dass** die Durchgangslöcher (5) einen Durchmesser (9) zwischen 0,3mm und 2mm, vorzugsweise zwischen 0,5mm und 1,5mm, aufweisen.

3. Zerfaserungselement nach einem der vorhergehenden Ansprüche, **dadurch gekennzeichnet, dass** die Beschichtung (6) aus Partikeln mit einer Größe von bis zu 1 µm, vorzugsweise bis zu 500nm, besteht.

4. Zerfaserungselement nach einem der vorhergehenden Ansprüche, **dadurch gekennzeichnet, dass** die Beschichtung (6) über einer Temperatur von 1000°C, vorzugsweise von 1100°C, beständig ist.

5. Zerfaserungselement nach einem der vorhergehenden Ansprüche, **dadurch gekennzeichnet, dass** die Beschichtung (6) eine auf den Grundkörper aufgebrachte erste Schicht (7), vorzugsweise aus einem TiAIN-basierten Material, und eine auf die erste Schicht (7) aufgebrachte zweite Schicht (8), vorzugsweise aus einem AlCrNbasierten Material, umfasst.

6. Vorrichtung zur Herstellung von Mineralwolle, umfassend
- zumindest ein Zerfaserungselement (1) nach einem der vorhergehenden Ansprüche, zum Aufteilen einer Schmelze in einzelne Fasern, und
- eine Zuführvorrichtung zum Gießen der Schmelze auf oder in das Zerfaserungselement (1).

7. Vorrichtung nach Anspruch 6, **gekennzeichnet durch** einen Antrieb zum Rotieren des Zerfaserungselements (1).

8. Vorrichtung nach Anspruch 7, **dadurch gekennzeichnet, dass** der Antrieb zum rotieren des Zerfaserungselements (1) mit über 1500U/min, vorzugsweise über 2000U/min, ausgebildet ist.

9. Verfahren zur Herstellung eines Zerfaserungselements (1) nach einem der Ansprüche 1 bis 5, umfassend die folgenden Schritte:
- Bereitstellen des Grundkörpers des Zerfaserungselements (1), und
- Aufbringen der hochtemperaturbeständigen und verschleißfesten Beschichtung (6) zumindest partiell auf den Grundkörper.

## Claims

1. Fibrising element (1) for producing mineral wool by pouring a melt, preferably of molten glass, into the fibrising element (1), comprising
- a base body formed as a rotating sieve and
- a sieve surface (4) comprising a plurality of through-holes (5) for dividing up the melt into individual fibres, the sieve surface (4) being formed on an annular casing of the base body,
**characterised in that** a heat-resistant, wear-resistant coating (6) is applied to the base body at least in part, the inner walls of the through-holes (5) being coated.

2. Fibrising element according to claim 1, **characterised in that** the through-holes (5) have a diameter (9) of between 0.3 mm and 2 mm, preferably between 0.5 mm and 1.5 mm.

3. Fibrising element according to either of the preceding claims, **characterised in that** the coating (6) consists of particles having a size of up to 1 µm, preferably up to 500 nm.

4. Fibrising element according to any of the preceding claims, **characterised in that** the coating (6) is resistant above a temperature of 1000 °C, preferably of 1100 °C.

5. Fibrising element according to any of the preceding claims, **characterised in that** the coating (6) comprises a first layer (7), preferably of a TiAlN-based material, applied to the base body and a second layer (8), preferably of an AlCrN-based material, applied to the first layer (7).

6. Device for producing mineral wool, comprising
- at least one fibrising element (1) according to any of the preceding claims for dividing up a melt into individual fibres and
- a supply device for pouring the melt onto or into the fibrising element (1).

7. Device according to claim 6, **characterised by** a drive for rotating the fibrising element (1).

8. Device according to claim 7, **characterised in that** the drive for rotating the fibrising element (1) is configured for over 1500 rpm, preferably over 2000 rpm.

9. Method for producing a fibrising element (1) according to any of claims 1 to 5, comprising the following steps:
- providing the base body of the fibrising element (1) and
- applying the heat-resistant, wear-resistant coating (6) to the base body at least in part.

## Revendications

1. Elément de défibrage (1) pour la fabrication de laine minérale par coulée d'une fusion, de préférence en verre fondu, dans l'élément de défibrage (1), comprenant
- un corps de base formé comme un tamis rotatif, et
- une surface tamisante (4) avec plusieurs trous de passage (5) pour la répartition de la fusion dans des fibres individuelles, la surface tamisante (4) étant formée au niveau d'une enveloppe annulaire du corps de base,
**caractérisé en ce qu'**un revêtement (6) résistant à haute température et résistant à l'usure est appliqué au moins partiellement sur le corps de base, les parois intérieures des trous de passage (5) étant recouvertes.

2. Elément de défibrage selon la revendication 1, **caractérisé en ce que** les trous de passage (5) présentent un diamètre (9) entre 0,3 mm et 2 mm, de préférence entre 0,5 mm et 1,5 mm.

3. Elément de défibrage selon l'une des revendications précédentes, **caractérisé en ce que** le revêtement (6) est composé de particules d'une taille allant jusqu'à 1 µm, de préférence jusqu'à 500 nm.

4. Elément de défibrage selon l'une des revendications précédentes, **caractérisé en ce que** le revêtement (6) résiste à une température supérieure à 1000 °C, de préférence à 1100 °C.

5. Elément de défibrage selon l'une des revendications précédentes, **caractérisé en ce que** le revêtement (6) comprend une première couche (7) appliquée sur le corps de base, de préférence en un matériau à base de TiAlN, et une seconde couche (8) appliquée sur la première couche (7), de préférence en un matériau à base de AlCrN.

6. Dispositif pour la fabrication de laine minérale, comprenant
- au moins un élément de défibrage (1) selon l'une des revendications précédentes, pour la répartition d'une fusion dans des fibres individuelles, et
- un dispositif d'amenée pour la coulée de la fusion sur ou dans l'élément de défibrage (1).

7. Dispositif selon la revendication 6, **caractérisé par** un entraînement pour faire tourner l'élément de défibrage (1).

8. Dispositif selon la revendication 7, **caractérisé en ce que** l'entraînement pour faire tourner l'élément de défibrage (1) est formé avec plus de 1500 tr/min, de préférence plus de 2000 tr/min.

9. Procédé pour la fabrication d'un élément de défibrage (1) selon l'une des revendications 1 à 5, comprenant les étapes suivantes :
- mise à disposition du corps de base de l'élément de défibrage (1), et
- application du revêtement résistant à haute température et résistant à l'usure (6) au moins partiellement sur le corps de base.
